# EUROPÄISCHE PATENTSCHRIFT

(11) **EP 0 614 694 B1**
(45) Veröffentlichungstag und Bekanntmachung des Hinweises auf die Patenterteilung: **15.05.1996**
(21) Anmeldenummer: 93104022.4
(22) Anmeldetag: 12.03.1993
(51) Int. Cl.: B01F 13/00, G01N 1/14

(54) **Emaillierter rohrförmiger Einbauteil**
Enamelled tubular element
Elément tubulaire émaillé

(43) Veröffentlichungstag der Anmeldung: 14.09.1994
(73) Patentinhaber: Pfaudler Werke GmbH, D-68721 Schwetzingen (DE)
(72) Erfinder: Stoltz, Bruno, Dipl.-Ing., W-6742 Herxheim (DE)
(74) Vertreter: Endlich, Fritz, Dipl.-Phys. Patentanwalt

(56) Entgegenhaltungen:
- EP-A- 0 430 021
- DE-A- 3 818 957
- US-A- 4 166 020
- US-A- 5 109 711

## Beschreibung

Die Erfindung betrifft einen emaillierten rohrförmigen Einbauteil, der in einen Behälterstutzen einsetzbar und daran befestigbar ist, und der an allen produktberührten Stellen emailliert und als Tauchrohr verwendbar ist.

Es sind bereits emaillierte Einbauteile dieser Art bekannt, die durch einen Behälterstutzen eines emaillierten Rührbehälters einsetzbar sind, die einen Innendurchmesser zwischen 25 und 200 mm und eine Gesamtlänge zwischen etwa 850 und 3150 mm aufweisen können und sich zum Einleiten oder Ausdrücken von Flüssigkeit und zur Begasung eignen.

Bei in der chemischen und pharmazeutischen Industrie benutzten Rührbehältern wird oft eine Vorrichtung zur Entnahme von Proben während des Betriebes vorgesehen. Als Probenahmerohre können übliche Tauchrohre verwendet werden. Bisher bekannte Ausführungsformen derartiger Tauchrohre bedingen jedoch, daß speziell für das Probenahmerohr ein Behälterstutzen erforderlich ist. An emaillierten Reaktionsbehältern ist aber die Anzahl der Stutzen begrenzt. Bei emaillierten Rührbehältern ist ferner die Anzahl und Größe der Stutzen in den meisten Fällen genormt. Die Zahl der Stutzen kann oft aus konstruktiven Gründen nicht erhöht werden. Es wäre deshalb wünschenswert, das Probenahmerohr mit einem anderen Bauteil kombinieren zu können. In diesem Zusammenhang ist es bereits bekannt, eine Temperatur-Meßfühleranordnung derart auszubilden, daß sie in einen emaillierten Einbauteil, der beispielsweise ein Stromstörer sein kann, eingesetzt und daraus entfernt werden kann (DE 38 18 957 A1).

Will man ein emailliertes Tauchrohr mit einem anderen emaillierten Einbauteil kombinieren, dann ergibt sich die Schwierigkeit, daß die Anforderungen bzw. die Auslegungskriterien solcher Einbauteile sehr unterschiedlich sind. Stromstörer müssen meist größere Querschnitte aufweisen, um den erforderlichen Störgrad aufzubringen und statischen und dynamischen Belastungen zu widerstehen. Andererseits sollen die Querschnitte der Ansaug-und Ablaufleitungen eines Probenahmesystems möglichst gering sein, um die Fördermengen der Pumpe gering halten zu können und um Absetzungen, z.B. bei Suspensionen in den Leitungen zu vermeiden.

Es ist deshalb Aufgabe der Erfindung, einen auch zu Probenahmen verwendbaren emaillierten Einbauteil der eingangs genannten Art anzugeben, durch den Nachteile und Schwierigkeiten der erwähnten Art möglichst weitgehend vermieden werden können. Insbesondere soll der emaillierte Behälter selbst konstruktiv unverändert bleiben und es soll nach Möglichkeit kein Stutzen ausschließlich für die Probenahmevorrichtung belegt werden. Alle produktberührten Teile sollen emailliert oder entsprechend korrosionsgeschützt sein.

Diese Aufgabe wird erfindungsgemäß durch den Gegenstand des Patentanspruchs 1 gelöst. Vorteilhafte Weiterbildungen der Erfindung sind Gegenstand der Unteransprüche.

Bei einem Einbauteil gemäß der Erfindung können deshalb weitgehend beliebige Querschnitte und Funktionen kombiniert werden. Beispielsweise kann bei Kombination mit einem Stromstörer das äußere Rohr nach der Funktion des Stromstörers ausgelegt werden, während der Querschnitt des inneren Rohres frei nach den Erfordernissen des Umlaufs für die Probenahme ausgelegt werden kann.

Ferner kann ein Einbauteil gemäß der Erfindung auch mit verschiedenen Meßsonden, z.B. zur Messung der Temperatur oder des pH-Werts im Behälter versehen werden, so daß an einem einzigen Einbauteil beispielsweise die Funktionen Stromstörer, Probenahmerohr, Meßsondenträger, Einleitrohr und Tauchrohr realisiert werden können.

Anhand der Zeichnung soll die Erfindung beispielsweise näher erläutert werden. Es zeigen:
Fig. 1 eine Schnittansicht eines Probenahmesystems mit einem emaillierten Einbauteil gemäß der Erfindung,
Fig. 2 eine teilweise im Schnitt dargestellte Seitenansicht eines Ausführungsbeispiels eines Einbauteils gemäß der Erfindung; und
Fig. 3 eine Draufsicht auf das Ausführungsbeispiel in Fig. 2.

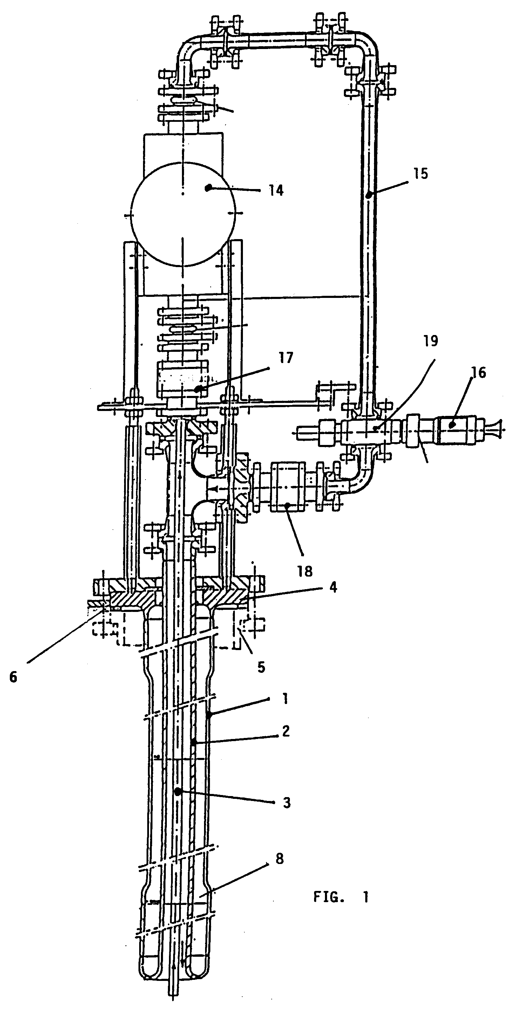

Das in Fig. 1 dargestellte Probenahmesystem weist einen Einbauteil gemäß der Erfindung auf, der in einen in gestrichelten Linien angedeuteten Stutzen 5 eines im übrigen nicht dargestellten emaillierten Rührbehälters eingebaut werden kann. In den Behälter ist ein außen emailliertes äußeres Rohr 1 eingesetzt. In diesem Rohr ist ein zweites Rohr 2 koaxial angeordnet, das am unteren Ende mit dem äußeren Rohr verbunden ist und an der Innenseite ebenfalls emailliert ist. Die untere Verbindung der beiden Rohre ist so gestaltet, daß der Verbindungsbereich überemailliert werden kann. Im Inneren des Rohrs 2 ist ein Probenahmerohr 3 aus einem Material angeordnet, dessen Korrosionsbeständigkeit derjenigen von Email entspricht. Vorzugsweise ist das Material des Probenahmerohrs PTFE. Zweckmäßigerweise wird der Außendurchmesser des Probenahmerohrs 3 wesentlich kleiner als der Innendurchmesser des inneren Rohrs 2 gewählt, damit die Fördermenge einer in dem Probenahmesystem angeordneten Umwälzpumpe 14 möglichst gering gehalten werden kann. Die Umwälzpumpe 14 ist an allen produktberührenden Stellen korrosionsbeständig ausgeführt. Es kann beispielsweise eine Membranpumpe verwendet werden, die mit PTFE ausgekleidet ist und eine PTFE-Membran besitzt.

Bei dem in den Fig. 1 bis 3 dargestellten Ausführungsbeispiel eines Einbauteils gemäß der Erfindung ist am oberen Ende des äußeren Rohrs 1 ein Befestigungsflansch 4 vorgesehen, der mit Hilfe einer Schraubflanschverbindung 6 eine Befestigung des Befestigungsflanschs 4 an einem Behälterstutzen 5 ermöglicht.

Die Rohre 1,2 und 3 sind konzentrisch zueinander angeordnet. Da der Einbauteil 1,2,4 mittels Losflansch mit dem Stutzen 5 und dem Aufsatz mit den Elementen 14 bis 19 verbunden ist, ist es im Falle eines Stromstörers möglich, diesen im Behälter beliebig zu drehen, ohne den Aufsatz mitdrehen zu müssen.

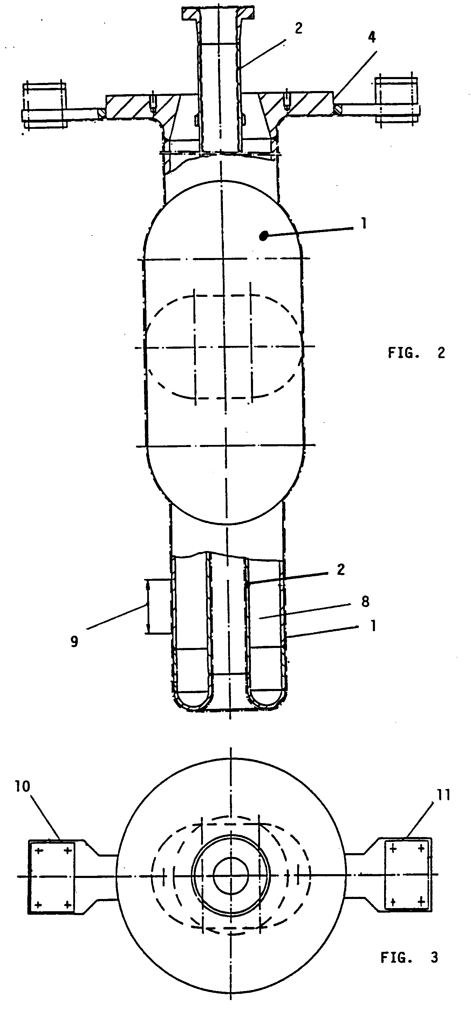

Wie aus Fig. 1 und 2 ersichtlich ist, kann das äußere Rohr 1 zur Ermöglichung einer weiteren Funktion des Einbauteils als Stromstörer ausgebildet sein.

Mit dem Einbauteil gemäß der Erfindung können an sich beliebige Querschnitte und Funktionen kombiniert werden. Während bei dem dargestellten Ausführungsbeispiel das äußere Rohr 1 nach der Funktion als Stromstörer ausgelegt ist, kann der Querschnitt des inneren Rohrs frei nach den Erfordernissen des Umlaufs für die Probenahme ausgelegt werden.

Das äußere Rohr 1 kann vorzugsweise zusätzlich eine Funktion als Thermometerrohr übernehmen, weil in dem Zwischenraum 8 zwischen dem äußeren und dem inneren Rohr Mittel zur Temperaturmessung angeordnet werden können. Außerdem kann das äußere Rohr 1 als Meßsondenträger dienen, beispielsweise indem auf der Oberfläche der Emaillierung des äußeren Rohrs 1 ein Bezugselektrodenbereich 9 aus pH-empfindlichem Email vorgesehen wird, welche Bezugselektrode aus Email mit einer an sich bekannten und nicht dargestellten Meßelektrode verbunden ist (DE 21 33 419 C2).

Um eine Temperaturmessung durchzuführen, kann in die Emailschicht des äußeren Rohrs 1 ein Thermoelement eingebettet sein. Die Temperatur kann auch mit Hilfe eines Widerstandsthermometers gemessen werden, das in die Emailschicht auf der Oberfläche des Stromstörers eingebettet ist. Eine weitere Möglichkeit besteht darin, an den Stromstörer Mittel für eine kontinuierliche Prüfung während der Produktion vorzusehen, um Emailschäden, undichte Tantalstopfen oder Leckagen an Dichtungen im Anfangsstadium erkennen zu können. Zu diesem Zweck kann in an sich bekannter Weise der Stromstörer mit einer Meß- und Kontrollelektrode aus Rhodium ausgestattet werden (Prospekt 177-8 def vom 30.4.1991 der Anmelderin).

Wie aus Fig. 2 und 3 ersichtlich ist, sind bei der Ausstattung des Stromstörers mit Meßsonden Anschlüsse 10,11 für die Meßsonden vorgesehen.

Das in Fig. 1 dargestellte Probenahmesystem enthält außer der erwähnten Umwälzpumpe 14 eine Umlaufleitung 15 und darin angeordnete Ventile 17,18,19. Wenn ferner in die Umlaufleitung 15 ein Dreiwegeventil eingesetzt wird, können über dieses Ventil Produktkomponenten eingeführt werden und das Probenahmerohr gleichzeitig noch als Einleitrohr benutzt werden.

Während des Betriebs ist die Umwälzpumpe 14 dauernd in Betrieb. Sie saugt Produkt durch das Probenahmerohr 3 an, wie durch den nach oben gerichteten Pfeil am unteren Ende des Rohrs 3 angedeutet ist. Das Produkt wird durch die Umlaufleitung 15 am Probenahmeventil 16 vorbei und durch den Ringspalt zwischen dem inneren Rohr 2 und dem Probenahmerohr 3 zurück in den Behälter gefördert, wie durch den nach unten gerichteten Pfeil am unteren Ende des Einbauteils angedeutet ist. Wenn eine Probe gezogen werden soll, wird das Probenahmeventil 16 zur Produktseite hin geöffnet und die Probemenge in eine Flasche abgezogen. Durch das dauernde Umpumpen wird sichergestellt, daß die Produktzusammensetzung am Probenahmeventil 16 immer identisch mit dem Produkt in dem emaillierten Rührwerkbehälter ist.

## Patentansprüche

1. Emaillierter rohrförmiger Einbauteil, der in einen Behälterstutzen einsetzbar und daran befestigbar ist, und der an allen produktberührenden Stellen emailliert und als Tauchrohr und zur Durchführung von Probenahmen verwendbar ist, **dadurch gekennzeichnet**, daß der Einbauteil doppelwandig ausgebildet ist, indem zwei koaxiale, am unteren Ende über einen Verbindungsbereich miteinander verbundene Rohre (1,2) vorgesehen sind, daß die Außenfläche des äußeren Rohrs (1), die Innenfläche des inneren Rohrs (2) und der Verbindungsbereich emailliert sind, und daß der Durchmesser des äußeren Rohrs (1) nach Festigkeitsgesichtspunkten derart gewählt ist, daß es die Durchführung einer weiteren Funktion des Einbauteils ermöglicht.

2. Emaillierter Einbauteil nach Anspruch 1, **dadurch gekennzeichnet**, daß in dem inneren Rohr (2) ein Probenahmerohr (3) aus einem Material angeordnet ist, dessen Korrosionsbeständigkeit derjenigen von Email entspricht, und dessen Außendurchmesser kleiner als der Innendurchmesser des inneren Rohrs (2) ist.

3. Emaillierter Einbauteil nach Anspruch 2, **dadurch gekennzeichnet**, daß das Material des Probenahmerohrs (3) PTFE ist.

4. Emaillierter Einbauteil nach einem der vorhergehenden Ansprüche, **dadurch gekennzeichnet**, daß das äußere Rohr (1) Bestandteil eines Stromstörers ist.

5. Emaillierter Einbauteil nach einem der vorhergehenden Ansprüche, **dadurch gekennzeichnet**, daß das äußere Rohr (1) Bestandteil eines Thermometerrohrs ist, und daß in dem Zwischenraum (8) zwischen dem äußeren und dem inneren Rohr (1,2) Mittel zur Temperaturmessung angeordnet sind.

6. Emaillierter Einbauteil nach einem der vorhergehenden Ansprüche, **dadurch gekennzeichnet**, daß auf der Oberfläche der Emaillierung des äußeren Rohrs (1) ein Meßelektrodenbereich (9) aus Email vorgesehen ist.

7. Emaillierter Einbauteil nach einem der vorhergehenden Ansprüche, **dadurch gekennzeichnet**, daß das innere Rohr (2) über die Oberfläche eines am oberen Ende des Einbauteils vorgesehenen Befestigungsflanschs (4) vorragt.

## Claims

1. An enamelled tubular insert element which can be inserted into a pipe connector of a vessel and be secured therein and which is enamelled at all points that are in contact with the product, and that can be used as a dip tube and for taking samples, characterized in that the insert element is of a double-walled design in that two coaxial pipes (1, 2) are provided that are connected to each other at the bottom end via a connecting zone, that the outer surface of the outer pipe (1), the inner surface of the inner pipe (2) and the connecting zone are enamelled, and that the diameter of the outer pipe (1) is chosen according to strength criteria in such a way that it allows the insert element to perform a further function.

2. An enamelled insert element according to claim 1, characterized in that in the inner pipe (2) there is arranged a sample-taking tube (3) made of a material whose corrosion resistance corresponds to that of enamel, and whose outer diameter is smaller than the inner diameter of the inner pipe (2).

3. An enamelled insert element according to claim 2, characterized in that the material of the sample-taking tube (3) is PTFE.

4. An enamelled insert element according to one of the preceding claims, characterized in that the outer pipe (1) forms part of an agitator baffle.

5. An enamelled insert element according to one of the preceding claims, characterized in that the outer pipe (1) forms part of a thermometer tube, and that in the gap (8) between the outer and inner pipe (1, 2) there are arranged temperature measuring means.

6. An enamelled insert element according to one of the preceding claims, characterized in that on the surface of the enamelling of the outer pipe (1), provision is made for a measuring electrode zone (9) made of enamel.

7. An enamelled insert element according to one of the preceding claims, characterized in that the inner pipe (2) projects over the surface of a fastening flange (4) provided at the upper end of the insert element.

## Revendications

1. Élément tubulaire émaillé, susceptible d'être utilisé dans une tubulure de récipient et pouvant être fixé sur elle et qui est émaillé à tous les endroits placés en contact avec le produit et peut être utilisé comme tube d'immersion et pour effectuer un prélèvement d'échantillon, caractérisé en ce que l'élément est réalisé à double paroi, du fait que deux tubes (1, 2) coaxiaux reliés ensemble à l'extrémité inférieure par une zone de liaison sont prévus, en ce que la surface extérieure du tube extérieur (1), la surface intérieure du tube intérieur (2) et la zone de liaison sont émaillées, et en ce que le diamètre du tube extérieur (1) est choisi, du point de vue de la résistance, de manière à permettre à l'élément d'assumer une autre fonction.

2. Élément émaillé selon la revendication 1, caractérisé en ce que dans le tube intérieur (2) est disposé un tube de prélèvement d'échantillon (3) réalisé en matériau dont la résistance à la corrosion correspond à celle de l'émail et dont la diamètre extérieur est inférieure au diamètre intérieur du tube intérieur (2).

3. Élément émaillé selon la revendication 2, caractérisé en ce que le matériau du tube de prélèvement d'échantillon (3) est du PTFE.

4. Élément émaillé selon l'une des revendications précédentes, caractérisé en ce que le tube extérieur (1) fait parti d'un turbulateur.

5. Élément émaillé selon l'une des revendications précédentes caractérisé en ce que le tube extérieur (1) fait parti d'un tube de thermomètre et en ce que des moyens destinés à mesurer la température sont disposés dans l'espace intérieur (8) compris entre le tube intérieur et le tube extérieur (1, 2).

6. Élément émaillé selon l'une des revendications précédentes, caractérisé en ce que sur la surface de l'émaillage du tube extérieur (1) est prévue une zone d'électrode (9) de mesure (9) en émail.

7. Élément émaillé selon l'une des revendications précédentes, caractérisé en ce que le tube intérieur (2) fait saillie sur la surface d'une bride de fixation (4) prévue à l'extrémité supérieure de l'élément.
